Europäisches Patentamt

European Patent Office

Office européen des brevets

(19)

(11) Numéro de publication: **0 084 501**
**B1**

(12)
# FASCICULE DE BREVET EUROPEEN

(45) Date de publication du fascicule du brevet:
04.12.85

(51) Int. Cl.⁴: **B 62 D 5/083**

(21) Numéro de dépôt: 83400119.0

(22) Date de dépôt: 18.01.83

(54) Distributeur pour servomécanisme hydraulique.

(30) Priorité: 18.01.82 FR 8200666

(43) Date de publication de la demande:
27.07.83 Bulletin 83/30

(45) Mention de la délivrance du brevet:
04.12.85 Bulletin 85/49

(84) Etats contractants désignés:
DE GB IT

(56) Documents cités:
EP - A - 0 041 887
EP - A - 0 053 559
FR - A - 2 160 548

(73) Titulaire: BENDIX France, Centre Paris Pleyel,
F-93521 St-Denis Cédex 01 (FR)

(72) Inventeur: Kervagoret, Gilbert, 5 Impasse Nobleterre,
F-95100 Argenteuil (FR)

(74) Mandataire: Le Moenner, Gabriel et al, SERVICE
BREVETS BENDIX 44, Rue François 1er, F-75008 Paris
(FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

L'invention concerne un distributeur rotatif pour servomécanisme hydraulique, notamment pour système de servodirection d'une automobile, adapté pour de tels systèmes dits »à centre ouvert« nécessitant un débit de fluide relativement important, l'agencement de distribution proposé se prêtant à une industrialisation particulièrement simple et rationnelle.

On connaît un distributeur, d'industrialisation simple, comportant deux éléments de distributeur, respectivement interne et externe, munis de parties cylindriques coaxiales susceptibles d'une rotation relative limitée autour de leur axe commun. De façon classique, l'élément de distributeur interne est monté tournant dans un alésage axial de l'élément de distributeur externe et ce dernier est monté tournant dans un boîtier fixe. Le circuit de distribution défini par ces deux éléments est essentiellement constitué par exemple par six rainures longitudinales formées sur la surface de l'élément externe de distributeur interne et par trois trous borgnes diamétraux pratiqués dans l'élément de distributeur externe. Ce distributeur est décrit dans la demande de brevet EP-A-0 053 559 déposée au nom de la demanderesse et publiée le 09. 06. 82 (état de la technique selon Art. 54(3)). Il donne toute satisfaction pour des débits faibles ou moyens, c'est-à-dire pour équiper un système de direction assistée d'une automobile de faible cylindrée. Cependant, si on désire augmenter les débits en vue de fournir des efforts d'assistance plus importants sans pour autant augmenter le niveau des pertes de charge en position de repos des éléments de distributeur correspondant à une conduite en ligne droite, on ne peut augmenter le diamètre des alésages matérialisant les passages à section variable au-delà de certaines limites car cela se traduirait par une impression de jen élastique dans la colonne de direction, correspondant à un angle de rotation important de la barre de torsion reliant les deux éléments de distributeur avant tout mouvement de braquage des roues. On est donc amené à multiplier le nombre de rainures et d'alésages dans les éléments de distributer interne et externe, respectivement, pour disposer d'un plus grand nombre de passages à section variable, agencés en parallèle.

L'invention concerne un nouveau type des distributeur, notamment pour débits élevés, dont le schéma de distrubution se prête particulièrement bien à une industrialisation rapide et peu coûteuse.

Plus précisément, l'invention concerne donc un distributeur pour servomécanisme hydraulique, notamment pour direction assistée, du type décrit dans EP-A-53 559, cést-à-dire comportant un boîtier fixe abritant deux éléments de distributeur cylindriques, coaxiaux et susceptibles d'une rotation relative limitée autour de leur axe commun, de part et d'autre d'une position relative neutre, ces éléments de distributeur respectivement externe et interne comportant des ouvertures et cavités définissant un premier circuit de circulation de fluide connectable entre une source de fluide et un réservoir de fluide d'une part et comportant deux prises de pression de travail d'autre part, ce circuit comportant deux branches de distribution agencées en parallèle entre des moyens de raccordement à ladite source et des moyens de raccordement audit réservoir, lesquelles comportent des passages à section variable de deux types se distinguant par des sens de variation de section inversés pour un sens quelconque de ladite rotation relative au-delà de ladite position relative neutre, chaque branche comprenant un branchement en série de passages des deux types incluant deux groupements en parallèle de passages d'un même type ayant des sections d'écoulement différentes au moins pour une plage de rotation relative entre les deux éléments de distributeur autour de ladite position relative neutre, le point de jonction des deux groupements en parallèle communiquant avec une prise de pression de travail précitée de la branche considérée, ledit distributeur étant caractérisé par un second circuit de circulation de fluide analogue audit premier circuit mais indépendant desdites prises de pression de travail, agencé entre lesdits moyens de raccordement à ladite source de fluide d'une part et lesdits moyens de raccordement audit réservoir par l'intermédiaire d'une restriction d'écoulement calibrée d'autre part, les passages à section variable de ce second circuit ayant des sections d'écoulement supérieures à celles de n'importe lequel des passages de même type dudit premier circuit dans la plage de rotation relative précitée.

Il est à noter qu'une version simplifiée du distributeur défini dans le préambule de la revendication 1 est décrite dans EP-A-41 887.

L'invention sera mieux comprise et d'autres avantages de celle-ci apparaîtront mieux à la lumière de la description qui va suivre d'un mode de réalisation de distributeur conforme à l'invention, donnée uniquement à titre d'exemple et faite en référence au dessin annexé dans lequel:

la Figure 1 représente une vue générale en coupe d'un distributeur selon l'invention;

la Figure 2 est une schéma illustrant le circuit de circulation de fluide defini dans ce distributeur, en liaison avec d'autres élémentes du système de direction assistée;

la Figure 3 est une coupe III-III de la Figure 1 limitée aux deux éléments de distributeur;

la Figure 4 est une coupe IV-IV de la Figure 1 limitée aux deux éléments de distributeur; et

la Figure 5 est une coupe V-V de la Figure 1 limitée aux deux éléments de distributeur.

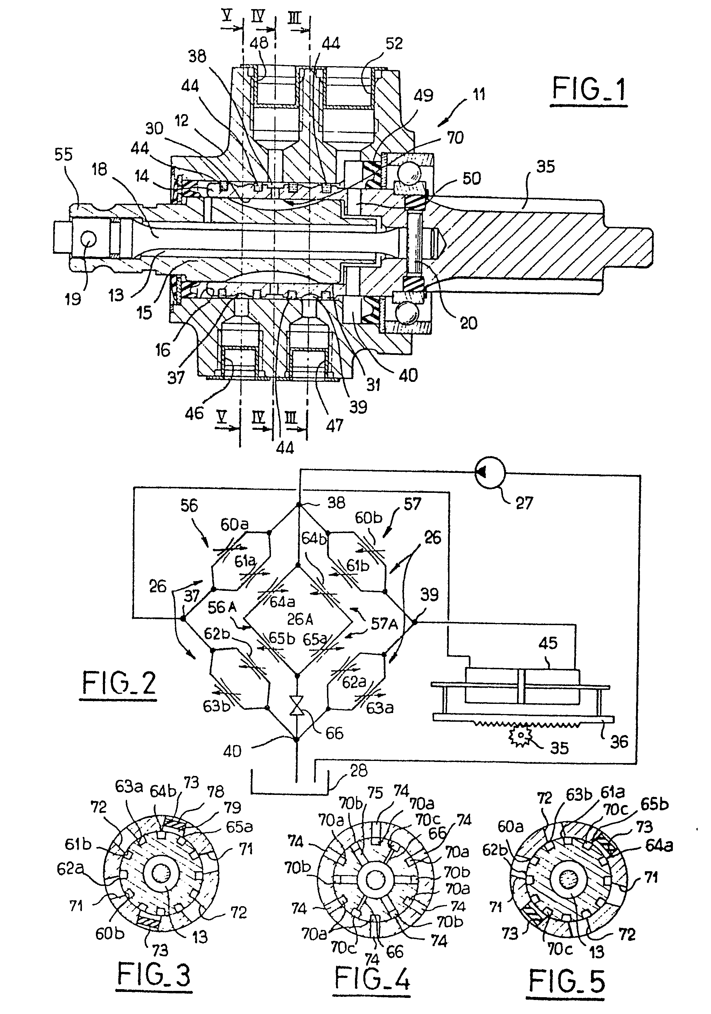

En se reportant aux Figures 1 et 2, le dispositif de distribution 11 selon l'invention comporte essentiellement un boîtier 12, fixe, muni d'un alésage 16 abritant deux éléments de distributeur 14 et 15, cylindriques et coaxiaux, comportant chacun une partie en forme de manchon. De façon classique, l'élément de distributeur 15 le plus interne est guidé en rotation dans le manchon formé par l'élément de distributeur 14 le plus externe tandis que l'espace interne 13 du manchon formé par l'élément de distributeur 14 abrite une barre de torsion 18 connectée, par l'une de ses extrémités, à l'élément de distributeur 15 par une goupille 19 et, par son autre extrémité, à l'élément de distributeur 14 par une goupille 20. Cette barre de torsion constitue donc, de façon bien connue, un moyen de rappel en position relative neutre des éléments de distributeur, autorisant une rotation limitée, de quelques degrés, d'un élément de distributeur par rapport à l'autre autour de leur axe commun (confondu avec celui de la barre de torsion 18) et de part et d'autre de ladite position relative neutre. En outre, les éléments de distributeur comportant aussi des ouvertures et des cavités dont l'agencement sera décrit plus en détail en référence aux Figures 2 à 5 et qui définissent un premier circuit de circulation de fluide 26 et un second circuit de circulation de fluide 26A (voir Figure 2) entre une source de fluide telle qu'une pompe 27 et un réservoir de fluide 28. On notera seulement à ce stade de la description que les ouvertures et cavités précitées coopèrent pour former des passages à section variable opérant par recouvrement des surfaces cylindriques en contact 30 et 31 des éléments de distributeur 14 et 15, respectivement, lors d'une rotation relative limitée précitée. Le distributeur 11 étant plus particulièrement destiné à un système de direction assistée, le manchon externe formant l'élément de distributeur 14 est prolongé par une pignon de sortie 35 destiné à être couplé à une crémaillère 36 (voir Figure 2) d'un mécanisme de direction des roues. Cet élément de distributeur 14 appelé aussi stator, est guidé en rotation dans l'alésage 16 et des espaces annulaires 37, 38, 39, 40 adjacents longitudinalement sont individualisés entre la surface externe de l'élément de distributeur 14 et la surface de l'alésage 16, au moyen de joints d'étanchéite annulaires 44 et 49, pour former des parties du premier circuit de circulation de fluide 26 et notamment deux prises de pression de travail, confondues avec les espaces annulaires 37 et 39 et destinées à être reliées aux deux chambres d'un vérin à double effet 45 (Figure 2) dont la tige est liée à la crémaillère 36. Les espaces annulaires 37 et 39 sont respectivement en communication avec le vérin 45 au moyen d'embouts de raccordement 46 et 47 du boîtier 12. De façon analogue, l'espace annulaire 38 est raccordé à la sortie de la pompe 27 par un embout de raccordement 48 du boîtier 12, l'ensemble constituant les moyens de raccordement à la source de fluide, cités plus haut. L'espace 40 (délimité à l'une de ses extrémités par le joint d'étanchéité 49) communique avec l'embout de raccordement 52 qui constitue la sortie de retour au réservoir 28. Des trous radiaux 50 dans l'élément 14 mettent l'espace 40 en communication avec l'espace interne 13 de l'élément de distributeur 15, dans lequel est logée la barre de torsion 18. Lélément de distributeur interne 15 est encore appelé rotor et il est destiné à être connecté par son extrémité axiale 55 à la colonne de direction (non représentée) du véhicule.

On va maintenant décrire les circuits de circulation de fluide 26 et 26A en référence à la Figure 2. De façon classique, le premier circuit 26 se compose essentiellement de deux branches parallèles 56, 57 munies de passages à section variable précités. Il existe deux types de passages se distinguant par des sens de variation de section inversés pour un sens quelconque de ladite rotation relative au-delà de la position relative neutre précitée des deux éléments de distributeur 14 et 15. Dans cette position neutre, la barre de torsion 18 ne subit aucune contrainte. Dans la suite de la description, les passages de l'un ou l'autre type seront différenciés par des références numériques portant les indices »a« ou »b«, respectivement. Ainsi, on distingue au moins deux passages 60a, 61a dans la branche 56, agencés en parallèle entre l'espace annulaire 38 d'alimentation en fluide et la prise de pression 37 et au moins deux passages 62a, 63a dans la branche 57 agencés en parallèle entre la prise de pression 39 et l'espace annulaire 40 de retour au réservoir (voir Figure 2). De façon analogue, on distingue au moins deux passages 60b, 61b dans la branche 57 agencés en parallèle entre l'espace annulaire 38 et la prise de pression 39 ainsi qu'au moins deux passages 62b, 63b, dans la branche 56 agencés en parallèle entre la prise de pression 37 et l'espace annulaire 40. Ainsi, chaque branche 56 ou 57 comporte des passages à section variable des deux types (indice »a« et »b«) montés en série entre la source de fluide (pompe 27) et le réservoir 28 et une portion de circuit entre des passages de types différents communique avec une prise de pression 37, 39 de la branche 56, 57, respectivement considérée, ces prises de pression étant destinées à être reliées respectivement aux deux chambres du vérin d'assistance 45.

Selon une particularité importante de l'invention, le second circuit 26A est analogue au premier circuit 26, c'est-à-dire qu'il comporte deux branches 56A et 57A agencées en parallèle et comportant chacune un branchement en série d'au moins un passage à section variable de type »a« et d'une passage à section variable de type »b«. Plus précisément, la branche 56A comporte un passage 64A relié aux moyens de raccordement à la source de fluide (notamment à l'espace annulaire 38) branché en série avec un passage 65b tandis que la branche 57A comporte un passage 64B relié aux moyens de raccordement 38 et branché en série avec un passage 65a. Cependant, le circuit 26A est indépendant des prises de pression de travail 37 et 39, c'est-à-dire que le point commun des passages 64a et 65b n'est pas connecté à l'espace annulaire 37 et que le point commun des passages 64b et 65a n'est pas connecté à l'espace annulaire 39. En outre, le point commun des passages à section variable 65a et 65b est relié aux moyens de raccordement au réservoir (notamment l'espace annulaire 40) par l'intermédiaire d'une restriction d'écoulement calibrée 66 dite: »restriction anticavitation«. Les passages 64 et 65 sont appelés des »passages pour hautes pressions« parce que leur fermeture complète, pour un sens de rotation relative correspondant, est déterminée à un angle de décalage angulaire entre les éléments de distributeur 14 et 15 pour lequel tous les autres passages du même type du premier circuit 26 sont déjà fermés. Par exemple, la fermeture complète des passages 64a, 65a n'intervient qu'après celle des passages 60a, 61a, 62a, 63a, pour un sens de rotation relative donnée et pendant cette ultime plage de rotation relative possible entre les éléments de distributeur 14 et 15, le débit de fluide dans le circuit 26A est essentiellement déterminé par les sections des passages 64a et 65a d'une part et par la section de la restriction d'écoulement 66 d'autre part. On notera que sur cette plage mettant en jeu des pressions de fonctionnement relativement élevées, l'écoulement de fluide dans le circuit 26 est sensiblement nul en raison de la fermeture complète des passages 60a, 61a d'une part et 62a, 63a d'autre part. Tout le débit de fluide passe donc par le circuit 26A de sorte qu'une perte de charge notable apparaît aux bornes de la restriction 66. Cette contrepression permet de repousser le seuil de cavitation dans les passages 64a et 65a et donc de repousser également le seuil de fonctionnement bruyant du distributeur, lequel seuil dépend avantageusement de la valeur de la contrepression. Ainsi, une contrepression de quelques bars suffit à repousser le seuil de fonctionnement bruyant à plusieurs dizaines de bars en amont de la restriction 66. Le bruit de fonctionnement est ainsi éliminé sur toute la plage de rotation relative des éléments de distributeur, c'est-à-dire sur toute la gamme de pressions de manœuvre du vérin 45. Pareillement, la fermeture complète des passages 64b et 65b n'intervient qu' »après« celle des passages 60b, 61b, 62b, 63b et il va de soi que tout ce qui a été décrit ci-dessus en référence au passage 64a et 65a et à la restriction 66 est valable pour les passages 64b et 65b et cette même restriction 66.

Les Figures 3 à 5 montrent comment sont réalisés les différents passages et restrictions constituant les circuits de circulation de fluide.

L'élément de distributeur 15, formant rotor comporte douze rainures longitudinales 70 creusées dans sa surface cylindrique externe 31 et fermées à leurs extrémités axiales. Ces rainures sont régulièrement angulairement décalées de 30° les unes par rapport aux autres. Six rainures 70a, ou rainures d'amenée de fluide, sont fermées et disposées en permanence en regard de trous 74 de l'élément de distributeur 14 qui communiquent avec l'espace annulaire 38 relié à la pompe 27. Six autres rainures 70b ou 70c sont les rainures d'évacuation de fluide disposées en alternance avec les rainures 70a. Les rainures 70b, au nombre de quatre, sont percées de trous 75 de diamètre suffisant pour ne pas créer de perte de charge notable, établissant la communication avec l'espace interne 13 abritant la barre de torsion 18, c'est-à-dire avec le réservoir 28 via les trous d'évacuation 40 et l'embout de raccordement 52. Chaque rainure 70c est également reliée à l'espace interne 13, mais par l'intermédiaire d'une restriction d'écoulement calibrée 66 précitée. Il apparaît clairement à ce stade de la description que le nombre de passages à section variable et de restrictions d'écoulement dans le mode de réalisation des Figures 1, 3, 4 et 5 est doublé par rapport au schéma de principe de la Figure 2.

L'élément de distributeur 14 ne comporte quant à lui que des alésages 71, 72, 73 pour matérialiser tous les passages à section variable précités, opérant par chevauchement partiel desdites rainures et desdits alésages.

Cette particularité est avantageuse car elle permet d'éliminer le façonnage par électro-érosion des ouvertures pratiquées à travers l'élément de distributeur 14.

On peut néanmoins adapter la caractéristique »Pression-Angle de rotation relative« du distributeur à toute loi de variation voulue par le fait que des passages d'un même typs sont agencés en parallèle dans une même branche 56 ou 57 du circuit 26 et dans la branche correspondante 56A ou 57A du circuit 26A avec des sections d'écoulement différentes au moins pour une plage de rotation relative entre les deux éléments de distributeur autour de la position relative neutre. On obtient ainsi une loi de variation voulue entre l'accroissement de pression disponible à l'une des prises de pression et l'angle de rotation relative dans le sens correspondant, par un choix judicieux d'une combinaison d'ouvertures à sections d'écoulement différentes, ces sections d'écoulement différentes étant par exemple considérées à la position relative neutre des éléments du distributeur. Dans le mode de réalisation décrit, les différences de section d'écoulement entre passages 60, 61, 64 (ou 62, 63, 65) sont simplement obtenus par des différences de diamètre entre les alésages 71, 72 et 73 correspondants. En effet, certains passages de type différents d'une même branche (60a, 62b) ou (61a, 63b) ou (64a, 65b) sont agencés par paires et une paire est définie par la coopération d'un alésage du stator 14 (71 ou 72 ou 73, respectivement) avec deux rainures (70a, 70b) ou (70a, 70c) adjacentes communiquant respectivement avec la pompe 27 et le réservoir 28, ledit alésage étant équidistant des deux rainures dans la position relative neutre illustrée aux Figures 3 à 5. On conçoit donc qu'avec un tel agencement, une simple différence de diamètre entre les alésages 71, 72 et 73 conditionne entièrement les sections d'écoulement des passages à section variable les uns par rapport aux autres. Dans l'exemple illustré, les alésages 72 ont un diamètre supérieur à celui des alésages 71 tandis que le diamètre des alésages 73 est supérieur à celui des alésages 72 de sorte que les passages à section variable du second circuit 26A (lequel est matérialisé par la coopération des alésages 73, de rainures 70a et des rainures 70c) ont des sections d'écoulement supérieures à celles de n'importe lequel des passages de même type du dudit premier circuit 26 dans la plage de rotation relative précitée. Autrement dit, pour une rotation relative importante entre les éléments de distributeur, correspondant à un fonctionnement mettant en jeu des pressions de fluide élevées, la pression de travail ne sera déterminée que par les sections d'écoulement des différents passages à section variable du circuit 26A et des restrictions calibrées 66. On distingue deux groupes d'alésages 71 à 73 pratiqués respectivement en regard des passages annulaires 37 et 39, c'est-à-dire des prises de pression de travail de la Figure 2. Ces deux groupes d'alésage sont respectivement visibles aux Figures 5 et 3 et matérialisent en coopération avec les rainures tous les passages à section variable des branches 56, 56A d'une part et 57, 57A d'autre part. Les alésages 73 sont rebouchés sur une partie de l'épaisseur de la paroi de l'élément de distributeur 14, par des inserts métalliques 78, pour ménager des creusures internes 79 respectives coopérant avec les rainures 70a et 70c. Ce rebouchage rend le circuit 26A indépendant des prises de pression de travail 37 et 39.

Le fonctionnement du distributeur est le suivant. Si l'on suppose que le conducteur sollicite le rotor 15 en rotation dans le sens des aiguilles d'une montre, tous les passages portant l'indice »a« vont se fermer et tous les passages portant l'indice »b« vont s'ouvrir. Le diamètre des alésages 71 étant supérieur à celui des alésages 72, ce sont les passages 60a de la branche 56 et 62a de la branche 57 qui se fermeront complètement en premier lieu. Ensuite, pour une rotation relative supplémentaire des deux éléments de distributeur dans le même sens, on aboutira à une fermeture complète des passages 61a et 63a. Pendant toute cette course de rotation relative, l'augmentation de pression à la prise de pression 39 évolue suivant une courbe prédéterminée en fonction de l'angle de rotation relative (notamment une courbe sensiblement parabolique) cette courbe résultant du choix des diamètres des alésages 71, 72 et 73. Pour une rotation relative supplémentaire dans le même sens, toute circulation de fluide dans le circuit 26 est sensiblement interrompue (le fluide qui circule ne correspond plus qu'à la quantité nécessaire pour actionner le vérin 45). La variation de pression est donc entièrement déterminée par les passages du circuit 26A et ces variations se répercutent néanmoins jusqu'à la prise de pression de travail 39 via l'espace annulaire 38 et les passages 60b, 61b largement ouverts. Tout le débit de fluide traversant les passages à section variable du circuit 26A passe donc par les deux restrictions d'écoulement calibrées 66. La contrepression ainsi créée permet d'éliminer le bruit dans les conditions de fonctionnement à hautes pressions correspondant notamment aux manœuvres

de garage du véhicule équipé d'un tel système de direction assistée. Le fonctionnement est tout à fait comparable pour l'autre sens de rotation.

## Revendications

1. Distributeur pour servomécanisme hydraulique, notamment pour direction assistée, du type comportant un boîtier (12) fixe abritant deux éléments de distributeur cylindriques, coaxiaux et susceptibles d'une rotation relative limitée autour de leur axe commun, de part et d'autre d'une position relative neutre, ces éléments de distributeur, respectivement externe (14) et interne (15) comportant des ouvertures et cavités définissant un premier circuit de circulation de fluide (26) connectable entre une source de fluide (27) et un réservoir de fluide (28) d'une part et comportant deux prises de pression de travail (37, 39) d'autre part, ce circuit comportant deux branches de distribution (56, 57) agencés en parallèle entre des moyens de raccordement à ladite source et des moyens de raccordement audit réservoir, lesquelles comportent des passages à section variable de deux types (»a«, »b«) se distinguant par des sens de variation de section inversés pour un sens quelconque de ladite rotation relative au-delà de ladite position relative neutre, chaque branche comprenant un branchement en série de passages des deux types incluant deux groupements en parallèle de passages d'un même type ayant des sections d'écoulement différentes au moins pour une plage de rotation relative entre des deux éléments de distributeur autour de ladite position relative neutre, le point de jonction des deux groupements en parallèle communiquant avec une prise de pression de travail (37, 39) précitée de la branche considérée, caractérisé par un second circuit de circulation de fluide (26A) analogue audit premier circuit mais indépendant desdites prises de pression de travail, agencé entre lesdits moyens de raccordement à ladite source de fluide d'une part et lesdits moyens de raccordement audit réservoir par l'intermédiaire d'une restriction d'écoulement calibrée (66) d'autre part, les passages à section variable de ce second circuit ayant des sections d'écoulement supérieures à celles de n'importe lequel des passages de même type dudit premier circuit dans la plage de rotation relative précitée.

2. Distributeur pour servomécanisme selon la revendication 1, comportant notamment un élément de distributeur interne muni de rainures longitudinales (70) régulièrement disposées à sa surface cylindrique externe et alternativement reliées auxdits moyens de raccordement (38) à ladite source de fluide et auxdits moyens de raccordement (40) audit réservoir et dans lequel deux passages à section variable de types différents d'une même branche dudit premier circuit sont matérialisés par le chevauchement partiel de deux rainures longitudinales (70a, 70b) voisines et d'un alésage (71 ou 72) traversant, pratiqué radialement dans l'élément de distributeur externe (14) en regard d'un espace annulaire ménagé entre cet élément de distributeur externe et ledit boîtier (12) pour définir la prise de pression de travail (37 ou 39) correspondante, caractérisé en ce que les passages à section variable de types différents dans une même branche dudit second circuit (26A) sont matérialisés par le chevauchement partiel de deux rainures longitudinales voisines (70a, 70c) et d'un alésage (73) pratiqué dans la surface de l'élément de distributeur externe et rebouché sur une partie de l'épaisseur de sa paroi pour ménager une creusure interne (79) coopérant avec lesdites deux rainures, l'une de ces deux rainures (70c) reliée audit réservoir étant en communication avec ladite restriction d'écoulement calibré (66).

3. Distributeur selon la revendication 2, du type dans lequel les rainures (70b, 70c) destinées à être mises en communication avec ledit réservoir communiquent par des perçages respectifs pratiqués dans le fond de celles-ci, avec une cavité axiale (13) dudit élément de distributeur interne (15) faisant partie desdits moyens de raccordement audit réservoir, caractérisé en ce que les perçages pratiqués dans le fond de telles rainures (70c) appartenant audit second circuit (26A) constituent ladite restriction d'écoulement calibrée.

## Patentansprüche

1. Verteiler für einen hydraulischen Servomechanismus, insbesondere für eine Servolenkung, mit einem ortsfesten Gehäuse (12), das zwei Verteilerelemente enthält, die zylindrisch ausgebildet sind, koaxial verlaufen und aus einer relativen Neutralstellung beidseitig eine begrenzte Relativbewegung um ihre gemeinsame Achse ausführen können, wobei diese Verteilerelemente, und zwar das äußere (14) und das innere (15) Verteilerelement, Öffnungen und Ausnehmungen aufweisen, die einen ersten Strömungskreis (26) bilden, der einerseits zwischen einer Strömungsmittelsquelle (27) und einem Strömungsmittelreservoir (28) schaltbar ist und andererseits zwei Arbeitsdruckanschlüsse (37, 39) aufweist, wobei dieser Strömungskreis zwei Verteilerzweige (56, 57) aufweist, die zwischen einem zur Quelle führenden Anschluß und einem zum Reservoir führenden Anschluß parallelgeschaltet sind, wobei diese querschnittsveränderliche Kanäle zweier Bauarten (»a«, »b«) aufweisen, die sich dadurch unterscheiden, daß sich ihr Querschnitt bei beliebiger Relativdrehung aus der Neutralstellung im umgekehrten Sinn ändert, wobei jeder Verteilerzweig eine Zweigleitung mit in Reihe geschalteten Kanälen der beiden Bauarten aufweist, die zwei Gruppen parallelgeschalteter Kanäle der gleichen Bauart mit unterschiedlichen Durchströmquerschnitten für mindestens einen Bereich einer Relativdrehung zwischen den beiden Verteilerelementen aus der Neutralstellung umfaßt, wobei der Verbindungspunkt der beiden parallelgeschalteten Kanalgruppen mit einem der vorgenannten Arbeitsdruckanschlüsse (37, 39) des betrachteten Verteilerzweiges in Verbindung steht, gekennzeichnet durch einen zweiten Strömungskreis (26A), der dem ersten Strömungskreis entspricht, jedoch von den Arbeitsdruckanschlüssen unabhängig ist und der einerseits mit dem zur Strömungsquelle führenden Anschluß und andererseits über eine kalibrierte Drosselstelle (66) mit dem zum Reservoir führenden Anschluß verbunden ist, wobei die querschnittsveränderlichen Kanäle des zweiten Strömungskreises Strömungsquerschnitte haben, die größer sind als die irgendeines der Kanäle der gleichen Bauart des ersten Strömungskreises in dem genannten Bereich der Relativdrehung.

2. Verteiler für einen Servomechanismus nach Anspruch 1, mit insbesondere einem inneren Verteilerelement, das mit längs verlaufenden Nuten (70) versehen ist, die über seine zylindrische Außenfläche gleichmäßig verteilt sind und abwechselnd mit dem zur Strömungsmittelquelle führenden Anschluß (38) und dem zum Reservoir führenden Anschluß (40) verbunden sind, und bei dem zwei querschnittsveränderliche Kanäle unterschiedlicher Bauart eines gleichen Zweiges des ersten Strömungsmittelkreises durch die teilweise Überlappung zweier benachbarter längs verlaufender Nuten (70a, 70b) und einer quer verlaufenden Bohrung (71 oder 72) gebildet sind, die radial in das äußere Verteilerelement (14) gegenüber einem Ringraum eingearbeitet ist, der zwischen dem äußeren Verteilerelement und dem Gehäuse (12) vorgesehen ist, um den entsprechenden Arbeitsdruckanschluß (37 oder 39) zu bilden, dadurch gekennzeichnet, daß die querschnittsveränderlichen Kanäle unterschiedlicher Bauart im gleichen Zweig des zweiten Strömungsmittelkreises (26A) durch die teilweise Überlappung zweier benachbarter längs verlaufender Nuten (70a, 70c) und einer Bohrung (73) gebildet sind, die in die Oberfläche des äußeren Verteilerelementes eingearbeitet ist und auf einem Teil der Dicke seiner Wand verschlossen ist, um einen mit den beiden Nuten zusammenwirkenden inneren Hohlraum (79) zu bilden, wobei eine der mit dem Reservoir verbundenen beiden Nuten (70c) mit der kalibrierten Drosselstelle (66) in Verbindung steht.

3. Verteiler nach Anspruch 2, bei dem die mit dem Reservoir zu verbindenden Nuten (70b, 70c) über in ihrem Boden gebildete entsprechende Bohrungen mit einem axialen Hohlraum (13) des inneren Verteilerelementes (15) verbunden sind, der einen Teil des zum Reservoir führenden Anschlusses bildet, dadurch gekennzeichnet, daß die Bohrungen, die in dem Boden der zum zweiten Kreis (26A) gehörigen Nuten (70c) gebildet sind, die kalibrierte Drosselstelle bilden.

## Claims

1. A distributor for a hydraulic servo mechanism, in particular for servo steering, of the type comprising a fixed casing (12) enclosing a pair of cylindrical, coaxial distributor elements adapted to perform a limited relative rotation about their common axis to either side of a relative neutral position, the external (14) and internal (15) distributor elements comprising openings and cavities defining a first fluid circuit (26) connectable between a fluid source (27) and a fluid reservoir (28) on the one side and comprising a pair of pressure work ports (37, 39) on the other side, said circuit comprising a pair of distributor branches (56, 57) connected in parallel between means for connection to said source and means for connection to said reservoir, which comprise passages of a variable cross-section of two types (»a«, »b«) distinguished from each other by inverse senses of cross-section variation for any sense of relative rotation from said relative neutral position, each branch comprising a line of series-connected passages of the two types including two groups of parallel connected passages of one type having different flow cross-sections for at least one range of relative rotation of the two distributor elements about said relative neutral position, the point of junction of the two groups in parallel communicating with one of said pressure work ports (37, 39) of the considered branch, characterized by a second fluid circuit (26A) analogous to said first circuit, however independent of said pressure work ports, and being connected between said means for connection to said fluid source on the one side and to said means for connection to the reservoir via a calibrated fluid restriction (66) on the other side, the passages of variable cross-section of said second circuit having flow cross-sections that are greater than of any of the passages of the same type of said first circuit in said range of relative rotation.

2. Distributor for a servo mechanism according to claim 1, comprising in particular an internal distributor element provided with longitudinal grooves (70) regularly spaced abouts its external cylindrical surface and alternatively connected to said means (38) for connection to said fluid source and said means (40) for connection to said reservoir, and wherein two passages of a variable cross-section of different types of one same branch of said first circuit are formed by partial overlapping of two adjacent longitudinal grooves (70a, 70b) and a transverse bore (71 or 72)radially extending in the external distributor element (14) opposite an annular space provided between said external distributor element and said casing (12) for defining the corresponding pressure work port (37 or 39), characterized in that the passages of variable cross-section of different types in a same branch of said second circuit (26A) are formed by partial overlapping of two adjacent longitudinal grooves (70a, 70c) and a bore (73) provided in the surface of the external distributor element and closed along a portion of the thickness of its wall for defining an internal cavity (79) cooperating with said two grooves, the one of said two grooves (70c) which is connected to said reservoir being in communication with said calibrated flow restriction (66).

3. Distributor according to claim 2 of the type wherein the grooves (70b, 70c) intended to communicate with said reservoir communicate by respective bores in the bottom of the grooves with an axial cavity (13) of the internal distributor element (15) forming part of said means for connection to said reservoir, characterized in that the bores formed in the bottom of said grooves (70c) associated to said second circuit (26A) constitute said calibrated flow restriction.

FIG_1

FIG_2

FIG_3

FIG_4

FIG_5

9